## Europäisches Patentamt

## European Patent Office

## Office européen des brevets

(11) Veröffentlichungsnummer: **0 184 077**
**B1**

(12) **EUROPÄISCHE PATENTSCHRIFT**

(45) Veröffentlichungstag der Patentschrift: **13.06.90**

(51) Int. Cl.⁵: **F 16 D 23/06**

(21) Anmeldenummer: **85114804.9**

(22) Anmeldetag: **21.11.85**

(54) Synchronisiereinrichtung für Schaltkupplungen.

(30) Priorität: **07.12.84 DE 3444670**

(43) Veröffentlichungstag der Anmeldung:
**11.06.86 Patentblatt 86/24**

(45) Bekanntmachung des Hinweises auf die
Patenterteilung:
**13.06.90 Patentblatt 90/24**

(84) Benannte Vertragsstaaten:
**AT BE CH FR GB IT LI LU NL SE**

(56) Entgegenhaltungen:
**DE-A-1 965 844**
**DE-A-2 659 448**
**DE-B-1 103 149**
**DE-C- 727 787**
**DE-C-3 411 351**
**FR-A-1 152 699**
**FR-E- 75 379**
**GB-A- 615 325**
**GB-A-2 117 067**
**US-A-3 860 101**

(73) Patentinhaber: **GETRAG Getriebe- und
Zahnradfabrik GmbH
Postfach 449 Solitudeallee 24
D-7140 Ludwigsburg (DE)**

(72) Erfinder: **Knödel, Gunter
Gaussweg 3
D-7130 Mühlacker (DE)**
Erfinder: **Lees, Wolfgang
Asperger Strasse 41
D-7140 Ludwigsburg (DE)**

(74) Vertreter: **Witte, Alexander, Dr.-Ing.
Witte, Weller & Hilgenfeldt Patent- und
Rechtsanwälte Augustenstrasse 7
D-7000 Stuttgart 1 (DE)**

Courier Press, Leamington Spa, England.

## Beschreibung

Die Erfindung betrifft eine Synchronisiereinrichtung für Schaltkupplungen, insbesondere von Schaltgetrieben für Kraftfahrzeuge, mit mindestens einem Räderpaar, dessen mit einer Schaltmuffe gleichachsiges Zahnrad einen Kupplungskörper mit Außenverzahnung aufweist und durch axiales Verschieben der mit einer Welle über eine Führungsmuffe drehstarr verbundenen, eine Innenverzahnung aufweisenden Schaltmuffe in den Kraftfluß ein- bzw. aus ihm ausschaltbar ist, sowie mit einem Synchronisierring, der in Umfangsrichtung mit der Schaltmuffe in formschlüssiger und mit dem Kupplungskörper in reibungsschlüssiger Verbindung steht und Sperrflächen für die Schaltmuffe aufweist, die bei jeder Relativdrehung zwischen Kupplungskörper und Schaltmuffe in den durch die formschlüssige Verbindung zwischen Synchronisierring und Schaltmuffe definierten Endlagen ein Ineingriffkommen der Innenverzahnung der Schaltmuffe mit der Außenverzahnung des Kupplungskörpers verhindern und erst bei Erreichen der Synchrondrehzahl unter Verdrehung von Synchronisierring und Kupplungskörper zulassen.

Derartige Synchronisiereinrichtungen, die auf dem Prinzip der Borg-Warner-Synchronisierung beruhen, sind in vielen Ausführungsformen bekannt. Eine spezielle Ausführungsform einer solchen Synchronisiereinrichtung ist beispielsweise in der DE-C-26 59 448 beschrieben.

Beim Einlegen eines Ganges wird bei dieser bekannten Synchronisiereinrichtung die Schaltmuffe, ausgehend von der neutralen Stellung, axial verschoben. Sie nimmt bei ihrer Axialbewegung den Synchronisierring mit und drückt ihn gegen einen Gegenkonus des Kupplungskörpers. Dadurch wird eine reibungsschlüssige Verbindung zwischen Synchronring und Kupplungskörper hergestellt, die eine Drehzahlangleichung zwischen Welle, Schaltmuffe und Synchronring einerseits und Kupplungskörper und Zahnrad des einzuschaltenden Räderpaares andererseits bewirkt. Dabei wird, solange die Synchrondrehzahl nicht erreicht ist, der Synchronring vom Kupplungskörper in Umfangsrichtung gegenüber der Schaltmuffe so weit verdreht, wie es die formschlüssige Verbindung zwischen Synchronisierring und Schaltmuffe zuläßt. Dabei werden am Synchronisierring angebrachte Sperrflächen in eine Stellung gebracht, in der sie mit entsprechenden Sperrflächen an der Schaltmuffe in Eingriff kommen und ein axiales Verschieben der Schaltmuffe in Richtung auf den Kupplungskörper verhindern. Bei den bekannten Synchronisiereinrichtungen sind diese Sperrflächen gewöhnlich an einer Außenverzahnung des Synchronisierrings angebracht, die der Außenverzahnung des Kupplungskörpers gleicht, während die Gegenflächen an den Enden der Zähne angebracht sind, welche die Innenverzahnung der Schaltmuffe bilden. Nach Erreichen der Synchrondrehzahl läßt sich dann die Schaltmuffe an den Sperrflächen des Synchronisierrings vorbei in die Außenverzahnung des Kupplungskörpers einschieben.

Beim Umschalten von einem niedrigeren in einen höheren Gang (Hochschalten) läuft das zur Schaltmuffe gleichachsige Zahnrad, zu dem beim Hochschalten die Verbindung herzustellen ist, zunächst schneller als die Schaltmuffe, so daß es normalerweise zur Herstellung des Gleichlaufs über den Synchronisierring abgebremst werden muß. Wenn jedoch das Getriebe starken Bremskräften ausgesetzt ist, beispielsweise infolge der bei kaltem Getriebe hohen Viskosität des Getriebeöls, wird das Getriebe nach Ausrücken des niedrigeren Gangs durch diese Bremskräfte stark verzögert, so daß die Getriebedrehzahl während des Einrückens des höheren Ganges so weit abfallen kann, daß Gleichlauf zwischen der Schaltmuffe und dem Kupplungskörper entsteht und die Schaltmuffe an den Sperrflächen des Synchronisierrings vorbeigleitet, ohne daß zwischen dem Synchronisierring und dem Kupplungskörper eine reibschlüssige Verbindung hergestellt worden ist, oder bei Ankunft der Schaltmuffenverzahnung an der Sperrverzahnung des Synchronisierrings sich der Synchronisierring bereits in Neutralstellung befindet und somit der Schaltmuffe der Weg zum Einschalten in die Kupplungskörperverzahnung freigegeben ist. Infolgedessen kann es durch den oben erwähnten Bremseffekt zu einer weiteren Verminderung der Drehzahl des zur Schaltmuffe gleichachsigen Zahnrades kommen, so daß beim weiteren Einrichten des Ganges die Zähne des Kupplungskörpers an den Zähnen der Schaltmuffe vorbeigleiten. Es entsteht dadurch ein Ratschgeräusch, das auch als Kratzen und insbesondere als "Kaltkratzen" bezeichnet wird, weil diese Erscheinung im allgemeinen nur bei kaltem Getriebe und daraus resultierender hoher Viskosität des Getriebeöls vorkommt.

Aus der FR-A-1 152 699 ist eine Synchronisiereinrichtung für Schaltkupplungen bekannt, bei der an den angespitzten Enden der an der Schaltmuffe angebrachten Zähne die in Laufrichtung vordere Schrägfläche sehr viel steiler ausgebildet ist als die in Laufrichtung hintere Schrägfläche. Entsprechend sind auch die hinteren Schrägflächen der Zähne am Synchronisierring sehr viel steiler als die vorderen Schrägflächen. Die Steilheit dieser Flächen ist so groß, daß der Einrückbewegung der Schaltmuffe durch den Synchronisierring nur ein verhältnismäßig geringer Widerstand entgegengesetzt wird, das Einrücken des Ganges also nicht mehr zwangsläufig verhindert wird. Es wird hier also bewußt auf eine vollkommene Synchronisation des zu kuppelnden Zahnrads verzichtet, um ein schnelleres Schalten zu ermöglichen. Damit wird hier ein gewisses Kratzen der zu kuppelnden Zahnungen in Kauf genommen. Obwohl die steileren Schrägflächen bei dem bekannten Getriebe eine größere axiale Ausdehnung haben als die flacheren Schrägflächen, haben sie eine bedeutend verminderte Synchronisationswirkung.

Aus der DE-B-1 103 149 ist eine weitere Synchronisiereinrichtung bekannt, bei der Sperrkörper durch eine Federanordnung in einer Neutralstellung gehalten werden, in der sie keinerlei Sperrwirkung haben. Bei einer besonderen Ausführungsform dieser bekannten Vorrichtung wird der Sperrkörper federnd in einer Endlage gehalten, aber auch in dieser Endlage hat der Sperrkörper keine Sperrwirkung. Darüberhinaus ist die bekannte Vorrichtung im wesentlichen für Rückschaltvorgänge ausgelegt und die Besonderheiten des von kaltem Getriebeöl bewirkten Schleppmomentes sind nicht berücksichtigt.

Der Erfindung liegt die Aufgabe zugrunde, eine Synchronisiereinrichtung der eingangs genannten Art so auszubilden, daß die vorstehend beschriebene, als "Kaltkratzen" behandelte Erscheinung vermieden wird.

Diese Aufgabe wird nach der Erfindung zum einen dadurch gelöst, daß die beim Hochschalten in Laufrichtung vordere Sperrfläche an der Schaltmuffe eine größere axiale Ausdehnung aufweist als die in Laufrichtung hintere Sperrfläche und die zugehörige eine Sperrfläche am Synchronisierring in axialer Richtung noch überlappt, wenn die beim Hochschalten in Laufrichtung hintere Sperrfläche die ihr zugehörige andere Sperrfläche am Synchronisierring bereits axial passiert hat. Die Aufgabe wird nach der Erfindung zum anderen dadurch gelöst, daß zwischen Führungsmuffe und Synchronisierring ein Druckelement so angeordnet ist, daß es bestrebt ist, den Synchronisierring in Bezug auf die Laufrichtung in seiner gegenüber der Führungsmuffe hinteren Stellung zu halten.

Durch beide Lösungen der Erfindungsaufgabe wird eine Einrichtung zum Ineingriff-Bringen der in Bezug auf die Laufrichtung vorderen Sperrflächen an der Schaltmuffe und hinteren Sperrflächen an dem Synchronisierring nach Herstellung des Gleichlaufs bei infolge hoher Ölviskosität beim Hochschalten von einer über der Synchrondrehzahl auf eine unter der Synchrondrehzahl abnehmenden Drehzahl des zur Schaltmuffe gleichachsigen Zahnrades geschaffen und demnach dafür Sorge getragen, daß trotz des momentanen Gleichlaufs zwischen Schaltmuffe und Synchronisierring die Schaltmuffe nicht ohne weiteres mit der Zahnung des Synchronisierrings in Eingriff gebracht werden kann, sondern daß die Schaltmuffe mit den Sperrflächen des Synchronisierringes in solcher Weise in Eingriff kommt, daß der Kupplungskörper vom Synchronisierring entgegen der Bremswirkung des hochviskosen Öles mitgenommen und zum Gleichlauf mit der Schaltmuffe gezwungen wird. Wenn dann die Synchrondrehzahl erreicht ist, kann der Gang in gewohnter Weise eingerückt werden. Dadurch ist eine wesentliche Quelle der als "Kaltkratzen" bekannten Erscheinung ausgeschaltet.

Im einzelnen wird durch die erstgenannte Lösung erreicht, daß, wenn beim Hochschalten der Gleichlauf unterschritten wird, der axiale Eingriffbereich der Sperrflächen, die bei sich gegenüber dem Kupplungskörper schneller drehender Schaltmuffe aneinander zur Anlage kommen, und damit die während des Schaltvorgangs für ein solches Ineingriff-Bringen zur Verfügung stehende Zeit vergrößert wird, wodurch gewährleistet ist, daß die Sperrfunktion des Synchronisierrings zur Wirkung kommt, die Drehzahldifferenz zwischen Schaltmuffe und Kupplungskörper so groß ist, daß ein Kaltkratzen auftreten würde. Die gleiche Wirkung wird auch erzielt, wenn die in Laufrichtung hintere Sperrfläche an der Verzahnung des Synchronisierringes eine größere axiale Ausdehnung hat als die in Laufrichtung vordere Sperrfläche. Es kommt nur darauf an, den axialen Eingriffsbereich zu vergrößern, wozu auch die genannten Sperrflächen sowohl an der Schaltmuffe als auch am Synchronisierring axial verlängert werden können.

Durch die unsymmetrische Ausbildung der Sperrflächen an den Zähnen der Schaltmuffe wird deren Scheitel gegenüber der Lücke zwischen den Zähnen des Kupplungskörpers einseitig versetzt, woraus sich unterschiedliche Verdrehwege für den Kupplungskörper beim Einrücken des Ganges ergeben, je nachdem, an welcher Seite die Zähne der Schaltmuffe mit ihren Sperrflächen an den Dachflächen der Zähne des Kupplungskörpers zur Anlage kommen. Diese Unterschiede machen sich im Schaltgefühl bemerkbar. Um auch diesen Effekt zu beseitigen, sind bei einer bevorzugten Ausführungsform der Erfindung die Dachflächen an der Außenverzahnung des Kupplungskörpers in der gleichen Weise wie die Sperrflächen an der Schaltmuffe unsymmetrisch ausgebildet, so daß in der Einrückstellung der Scheitel zwischen den Sperrflächen der Schaltmuffe wenigstens annähernd symmetrisch zu den Scheiteln zwischen den Dachflächen an zwei benachbarten Zähnen der Außenverzahnung des Kupplungskörpers angeordnet ist.

Durch diese Maßnahme werden nach beiden Richtungen im wesentlichen gleiche Gleitwege erzielt. Ein weiterer Vorteil dieser Ausbildung besteht darin, daß beim Schalten zwischen den Zähnen der Schaltmuffe und des Kupplungskörpers auf der Schub- und Zugflanke jeweils die gleiche Flächenbelastung vorliegt.

Wie oben erwähnt, hat die beschriebene Verlängerung der vorderen Sperrflächen an der Schaltmuffe den Zweck, die Zeit zu vergrößern, während der der hinter der Schaltmuffe zurückbleibende Synchronisierring mit den vorderen Sperrflächen an der Schaltmuffe in Eingriff kommen kann. Bei der zweiten Lösung wird ein gleichartiger Effekt dadurch erzielt, daß die Zeit vermindert wird, die der Synchronisierring benötigt, um nach dem Erreichen der Synchrondrehzahl durch weitere Verzögerung mit den vorderen Sperrflächen am Synchronisierring in Eingriff zu kommen. Das Druckelement wirkt nach Erreichen der Synchrondrehzahl verzögernd auf den Synchronisierring, so daß er mit seinen hinteren Sperrflächen an den vorderen Sperrflächen an der Schaltmuffe zur Anlage kommt, bevor die Schaltmuffe bei normaler Schaltgeschwindigkeit aus dem Bereich der Sperrflächen ausgerückt worden ist. Die Sperrflächen sind dann so lange wirksam, bis wiederum durch Beschleunigen des Kupplungskörpers mit dem zur Schaltmuffe gleichachsigen Zahnrad die Synchrondrehzahl hergestellt worden ist.

Das Druckelement kann auf unterschiedliche Weise verwirklicht sein. Bei einer bevorzugten Ausführungsform der Erfindung wird das Druckelement von einem sich in Umfangsrichtung der Synchronisiereinrichtung erstreckenden, von einer Feder belasteten und in seiner Längsrichtung verschiebbaren Bolzen gebildet. Ein solcher Bolzen kann in einer Anschlagnase des Synchronisierrings gelagert sein, die in eine Aussparung der Führungsmuffe eingreift, und mit seinem freien Ende an der in Laufrichtung vorderen Flanke der Aussparung anliegen. Es ist aber auch möglich, daß der Bolzen in einem axial gerichteten Vorsprung des Synchronisierringes gelagert ist und an seinem freien Ende eine Schrägfläche aufweist, die an einer entsprechenden, in Bezug auf die Laufrichtung nach hinten weisenden Schrägfläche der Schaltmuffe anliegt. Diese Schrägfläche kann sich vorteilhaft am Ende eines verkürzten Zahns der Innenverzahnung der Schaltmuffe befinden.

Es versteht sich, daß die Möglichkeit besteht, in einer Synchronisiereinrichtung nach der Erfindung sowohl unsymmetrische Sperrflächen an der Schaltmuffe als auch Druckelemente zwischen Führungsmuffe und Synchronisierring anzuordnen, da sich ihre Wirkungen ergänzen, so daß durch eine solche Kombination beider Anordnungen eine besonders wirksame Maßnahme zur Vermeidung des Kaltkratzens zu sehen ist. Weiterhin lassen sich die erfindungsgemäßen Maßnahmen mit den Maßnahmen nach Patent(anmeldung) P 34 11 351.7 verbinden, die das Ziel haben, einen Verlust der Synchronisierung zu vermeiden, der in dem Zeitraum zwischen Erreichen der Synchrondrehzahl und der damit verbundenen Aufhebung der Axialkraft und dem Einrücken der Innenverzahnung der Schaltmuffe in die Außenverzahnung des Kupplungskörpers eintreten könnte.

Die Erfindung wird im folgenden anhand der in der Zeichnung dargestellten Ausführungsbeispiele näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Es zeigen

Fig. 1 einen Längsschnitt durch einen Getriebeteil mit einer Synchronisiereinrichtung nach der Erfindung,

Fig. 2 einen Ausschnitt aus einer Abwicklung der durch die Linie II-II definierten Zylinderfläche des Getriebeteiles nach Fig. 1 in vergrößertem Maßstab,

Fig. 3 die Anordnung nach Fig. 2 im Augenblick des Synchronlaufes von Schaltmuffe und Synchronisierring,

Fig. 4 einen Teilschnitt längs der Linie IV-IV durch das Getriebe nach Fig. 1 wiederum in vergrößertem Maßstab,

Fig. 5 einen Schnitt längs der Linie V-V durch die Anordnung nach Fig. 4,

Fig. 6 eine weitere Ausführungsform einer Synchronisiereinrichtung nach der Erfindung in einer Darstellung ähnlich Fig. 4 und

Fig. 7 die Anordnung nach Fig. 6 in einer Darstellung ähnlich Fig. 5.

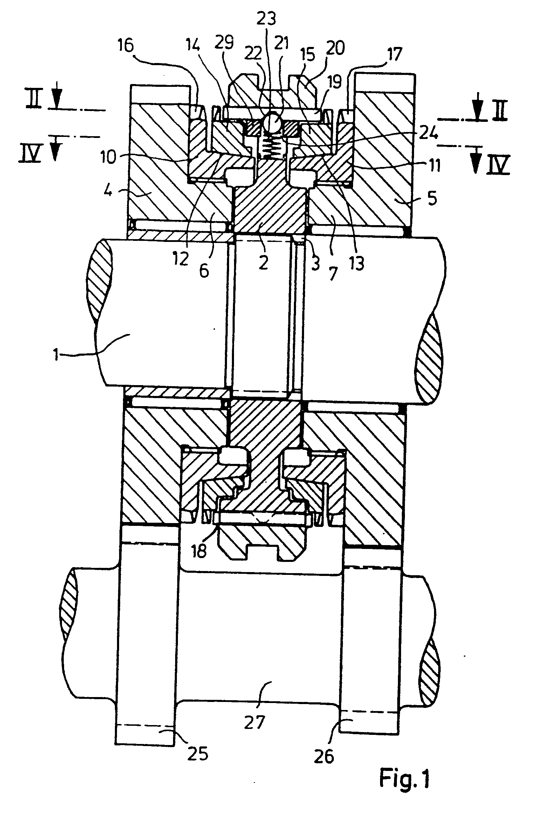

Der in den Fig. 1 bis 5 dargestellte Getriebeteil weist eine Welle 1 auf, auf der eine Führungsmuffe 2 mittels einer Verzahnung 3 drehfest und axial unverschieblich befestigt ist. Zu beiden Seiten neben der Führungsmuffe 2 sind auf der Welle 1 Zahnräder 4, 5 drehbar gelagert, die an ihrer der Führungsmuffe 2 zugewandten Seite eine axiale Verlängerung 6 bzw. 7 aufweisen, auf der jeweils ein Kupplungskörper 10 bzw. 11 aufgesetzt ist. Die Kupplungskörper 10, 11 greifen mit einer Innenverzahnung in eine Außenverzahnung an den Verlängerungen 6, 7 an, so daß sie mit den zugeordneten Zahnrädern 4, 5 drehfest verbunden sind. Die Kupplungskörper weisen jeweils eine Kegelfläche 12 bzw. 13 auf, die jeweils einen Gegenkonus für einen Synchronisierring 14 bzw. 15 bildet. Außerdem weisen die Kupplungskörper 10, 11 am Umfang eines an die Kegelflächen 12, 13 angrenzenden Abschnittes jeweils eine Außenverzahnung 16, 17 auf, welche den gleichen Durchmesser und die gleiche Teilung hat wie eine Außenverzahnung 18 am Umfang der Führungsmuffe 2. In diese Verzahnung greift die Innenverzahnung 19 einer Schaltmuffe 20 ein, die in ihrer Ruhestellung zentrisch zur Mittelebene der Führungsmuffe 2 angeordnet ist und eine zentrale Ringnut 22 aufweit, in die Rastkugeln 21 eingreifen. Die Rastkugeln 21 sind zusammen mit sie belastenden Schraubendruckfedern 23 in radialen Bohrungen 24 der Führungsmuffe 2 angeordnet.

Die Zahnräder 4, 5 stehen mit Zahnrädern 25, 26 in Eingriff, die auf einer zur Welle 1 parallelen Vorgelegewelle 27 fest angeordnet sind. Bei laufendem Getriebe werden demnach die auf der Welle 1 frei drehbar gelagerten Zahnräder 4, 5 stets von den auf der Vorgelegewelle 27 angeordneten Zahnrädern 25, 26 mitgenommen. Das Einlegen eines bestimmten Ganges erfolgt in bekannter Weise dadurch, daß die Schaltmuffe 20 durch axiales Verschieben mit der Außenverzahnung 16, 17 des Kupplungskörpers eines benachbarten Zahnrades 4, 5 in Eingriff gebracht wird, wodurch eine starre Verbindung zwischen der Antriebswelle 1 und dem mit der Schaltmuffe in Eingriff stehenden Zahnrad hergestellt wird.

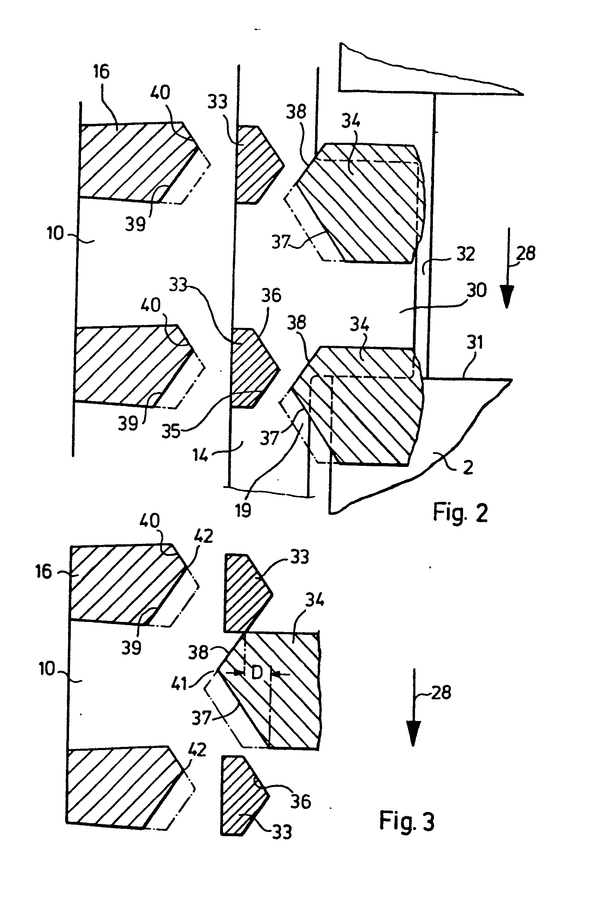

Es sei angenommen, daß das in Fig. 1 dargestellte Getriebeteil den ersten und den zweiten Gang eines Kraftfahrzeug-Getriebes umfaßt. Ist die Schaltmuffe 20 mit dem dem ersten Gang zugeordneten, in Fig. 1 rechten Zahnrad 5 gekoppelt, so dreht sich das dem zweiten Gang zugeordnete Zahnrad 4 mit einer größeren Geschwindigkeit als das Zahnrad 5. Wird weiterhin angenommen, daß der in den Fig. 2 bis 4 eingezeichnete Pfeil die Laufrichtung 28 der Welle 1 mit der Schaltmuffe 20 angibt, so ist das Zahnrad 4 mit dem zugeordneten Kupplungskörper 10 und dessen Verzahnung 16 in der Laufrichtung 28 gegenüber der Schaltmuffe 20 voreilend.

Soll nun vom ersten in den zweiten Gang gewechselt, also hochgeschaltet werden, wird die Schaltmuffe aus der Außenverzahnung 17 des Kupplungskörpers 11 ausgerückt und in die Neutralstellung gebracht, die in Fig. 1 dargestellt ist. Beim Weiterschieben der Schaltmuffe in den Fig. 1 bis 3 nach links in Richtung auf das Zahnrad 4 nimmt die Schaltmuffe den benachbarten Synchronisierring 14 über einen Druckstein 29 mit und bringt dadurch den Synchronisierring mit der Kegelfläche 12 am Kupplungskörper 10 in Eingriff. Der Reibungsschluß bewirkt, daß der Synchronisierring 14 in Laufrichtung 28 durch das schneller laufende Zahnrad 4 mit dem Kupplungskörper 10 mitgenommen wird und sich mit einer axialen Anschlagnase 30 an eine entgegengesetzt zur Laufrichtung 28 gerichtete Flanke 31 einer Aussparung 32 in der Führungsmuffe 2 anlegt. Die Synchronisieringe weisen eine Außenverzahnung auf, die der Außenverzahnung des Kupplungskörpers und der Innenverzahnung der Schaltmuffe entspricht. Die Zähne 33 weisen an ihren den Zähnen 34 der Schaltmuffe zugewandten Enden schräge Sperrflächen 35, 36 auf, die mit entsprechenden, schrägen Sperrflächen 37, 38 an den Zähnen der Schaltmuffe 20 zusammenwirken. In der beschriebenen Stellung des Synchronisierringes 14 kommt die Schaltmuffe mit den in bezug auf die Laufrichtung 28 hinteren Sperrflächen 38 an den in bezug auf die Laufrichtung vorderen Sperrflächen 35 der Zähne 33 des Synchronisierringes zur Anlage. Durch die über die Sperrflächen auf den Synchronisierring 14 ausgeübte Axialkraft wird der Synchronisierring auf die Kegelfläche 12 des benachbarten Kupplungskörpers aufgedrückt, so daß der Kupplungskörper mit dem Zahnrad 4 abgebremst wird, bis ein Gleichlauf zwischen Schaltmuffe, Synchronisierring und Kupplungskörper mit Zahnrad erreicht ist. Dann läßt sich die Verzahnung 19 der Schaltmuffe unter leichtem Verdrehen von Synchronisierring und Kupplungskörper in die Außenverzahnung 16 des Kupplungskörpers einführen. Um dieses Einführen zu erleichtern, weisen auch die Zähne am Umfang der Kupplungskörper an ihren der Schaltmuffe zugewandten Enden Dachschrägen 39, 40 auf.

Im Sinne der beim Hochschalten erforderlichen Verminderung der Drehzahl des zu dem höheren Gang gehörenden Zahnrades wirken auch die natürlichen Laufwiderstände im Getriebe, nämlich die Lagerreibung und der Bremseffekt des Getriebeöles. Insbesondere kann bei kaltem Getriebe die Bremswirkung des Öles infolge hoher Viskosität so stark sein, daß die Drehzahl des zu kuppelnden Zahnrades mit Kupplungskörper so schnell abfällt, daß zwischen dem Kupplungskörper und der Schaltmuffe Gleichlauf besteht, so daß der Synchronisierring keine definierte Stellung hat und die Zähne 34 der Schaltmuffe zwischen die Zähne 33 des Synchronisierringes widerstandslos eintreten können. In diesem Fall wird auf den Synchronisierring keine Axialkraft ausgeübt, welche eine Synchronisierung des benachbarten Zahnrades mit dem Kupplungskörper 10 bewirkt. Daher kann dann das zu kuppelnde Zahnrad 4 mit dem Kupplungskörper 10 bereits eine geringere Drehzahl haben als die Schaltmuffe, wenn die Verzahnung der Schaltmuffe die Verzahnung des Kupplungskörpers erreicht, so daß es zu einer Relativbewegung zwischen diesen Verzahnungen 16 und 19 kommt. Das Übereinanderhinweggleiten der Dachschrägen an den Enden der entsprechenden Zähne ist beim Schalten des Getriebes spürbar und führt zur Entstehung eines Ratschgeräusches, das auch als "Kratzen", insbesondere als "Kaltkratzen" bezeichnet wird, weil es vornehmlich bei kaltem Getriebe auftritt.

Bei dem erfindungsgemäßen Getriebe ist dieser Effekt durch eine asymmetrische Ausbildung der Sperrflächen 37, 38 an den Zähnen 34 der Schaltmuffe weitgehend vermieden. Die beiden Sperrflächen haben zwar die gleiche Neigung gegenüber der Achsrichtung, jedoch sind sie in bezug auf die Längsmitte des Zahnes 34 so versetzt, daß die in Laufrichtung 28 vordere Sperrfläche 37 eine größere axiale Ausdehnung aufweist als die in Laufrichtung hintere Sperrfläche 38. Während bei der strichpunktiert angedeuteten, symmetrischen Ausbildung der Zähne 34 der Schaltmuffe 20 bei deren Eintritt zwischen die Zähne 33 des Synchronisierringes 14 keinerlei Synchronisierarbeit mehr geleistet werden kann, weil keine Flächen mehr aufeinandertreffen können, die eine zur Synchronisierung erforderliche Axialkraft übertragen, kann sich bei dem erfindungsgemäßen Getriebe auf der Strecke D, um welche die in Laufrichtung vordere Sperrfläche 37 in Axialrichtung länger ist als die in Laufrichtung hintere Sperrfläche 38, ein Eingriff mit der hinteren Sperrfläche 36 am benachbarten Zahn 33 des Synchronisierringes erfolgen, wenn der Synchronisierring zusammen mit dem Kupplungskörper des Zahnrades abgebremst wird und dadurch relativ zur Schaltmuffe zurückbleibt, also gegenüber der Schaltmuffe eine zur Laufrichtung 28 entgegengesetzte Relativbewegung ausführt.

Ist also die Abbremsung des Getriebes so stark, daß es zu dem Kaltkratzen kommen kann, so kommt auch die in Laufrichtung hintere Sperrfläche 36 des Synchronisierringes an der in Axialrichtung verlängerten, vorderen Sperrfläche 37 der Schaltmuffe zur Anlage und hindert dadurch ein weiteres Einrücken der Schaltmuffe. Infolgedessen wird nun über diese Sperrflächen auf den Synchronisierring eine Axialkraft ausgeübt, die in herkömmlicher Weise den Gleichlauf des Kupplungskörpers mit dem Zahnrad erzwingt, bei dessen Erreichen ein geräuschfreies Einrücken der Schaltmuffe in die Kupplungsstellung möglich ist.

Wenn die Innenverzahnung der Schaltmuffe 20 mit den Sperrflächen 37, 38 an den Enden ihrer Zähne 34 auf die Dachschrägen 39, 40 an den Enden der Außenverzahnung 16 des Kupplungskörpers auftrifft, gleiten diese Flächen unter Verdrehen des Kupplungskörpers 10 gegenüber der Schaltmuffe aneinander ab, bis die Zähne 34 der Schaltmuffe den Lücken zwischen den Zähnen 16 des Kupplungskörpers gegenüberstehen. Es ist ohne weiteres ersichtlich, daß bei der herkömmlichen, symmetrischen Ausbildung der Zähne 16, wie sie in den Fig. 2 und 3 durch die strichpunktierten Linien veranschaulicht ist, die Gleitwege unterschiedlich lang sind, je nachdem, ob die Zähne 34 der Schaltmuffe mit der kurzen Sperrfläche 38 oder der langen Sperrfläche 37 auf die Gegenfläche auftreffen. Die sich hieraus ergebenden, unterschiedlich langen Gleitwege sind beim Schalten des Getriebes spürbar und werden als unangenehm empfunden. Um diese unterschiedlich langen Gleitwege zu vermeiden, sind bei dem dagestellten Ausführungsbeispiel auch die Dachschrägen 39, 40 an den Zähnen 16 der Kupplungskörper unsymmetrisch ausgebildet, derart, daß die in Laufrichtung vorderen Dachschrägen 39 eine größere axiale Länge aufweisen als die in Laufrichtung 28 hinteren Dachschrägen 40, und zwar in der Weise, daß der Scheitel 41 zwischen den Sperrflächen 37, 38 an den Zähnen 34 der Schaltmuffe etwa in der Mitte zwischen den Scheiteln 42 an der Verzahnung 16 des Kupplungskörpers 10 angeordnet ist, wenn die Zähne 34 der Schaltmuffe jeweils den Lücken in der Verzahnung 16 des Kupplungskörpers gegenüberstehen, wie es Fig. 3 zeigt.

Bei dem in den Fig. 1 bis 5 dargestellten Ausführungsbeispiel ist weiterhin in der Anschlagnase 30 des Synchronisierringes 14 ein von einer Feder 43 belasteter Bolzen 44 verschiebbar gelagert. Dieser Bolzen stützt sich an der Flanke 31 der Aussparung 32 der Führungsmuffe 2 ab, die entgegengesetzt zur Laufrichtung 28 ist. Dieser sich in Umfangsrichtung erstreckende Bolzen ist bestrebt, den Synchronisierring gegenüber der Führungsmuffe 2 entgegen der Laufrichtung 28 zu verdrehen.

Läuft beim Einrücken des höheren Ganges, wie eingangs behandelt, das Zahnrad 4 mit dem Kupplungskörper 10 schneller als die Führungsmuffe mit dem Synchronisierring 14, so wird durch den beim Kuppeln erzeugten Reibungsschluß zwischen Synchronisierring und Kupplungskörper der Synchronisierring in die in Fig. 2 dargestellte Lage mitgenommen, bei welcher die den Bolzen 44 belastende Feder 43 gespannt ist.

Bei Erreichen des Gleichlaufes entfällt das auf den Synchronisierring von der Kegelfläche des Kupplungskörpers 10 ausgeübte Drehmoment, so daß sich die Feder 43 entspannen kann. Hierdurch wird der Synchronisierring gegenüber der Führungsmuffe 2 entgegen der Laufrichtung verdreht, bis die Anschlagnase 30 an der gegenüberliegenden Flanke 45 der Aussparung 32 zur Anlage kommt, welche in die Laufrichtung 28 weist. Dadurch kommt die rückwärtige Sperrfläche 36 der Zähne 33 am Synchronisierring 14 mit den in Laufrichtung vorderen Sperrflächen 37 an den Zähnen 34 beschleunigt in Eingriff, so daß wiederum der oben beschriebene Synchronisiervorgang stattfinden kann, der das "Kaltkratzen" verhindert. Der durch den gefederten Bolzen 44 bewirkte Lagewechsel des Synchronisierringes bei Erreichen der Synchrondrehzahl erlaubt es, auf unsymmetrische Sperrflächen an den Zähnen 34 der Schaltmuffe zu verzichten, auch wenn die Kombination der beiden behandelten Maßnahmen besonders wirksam ist.

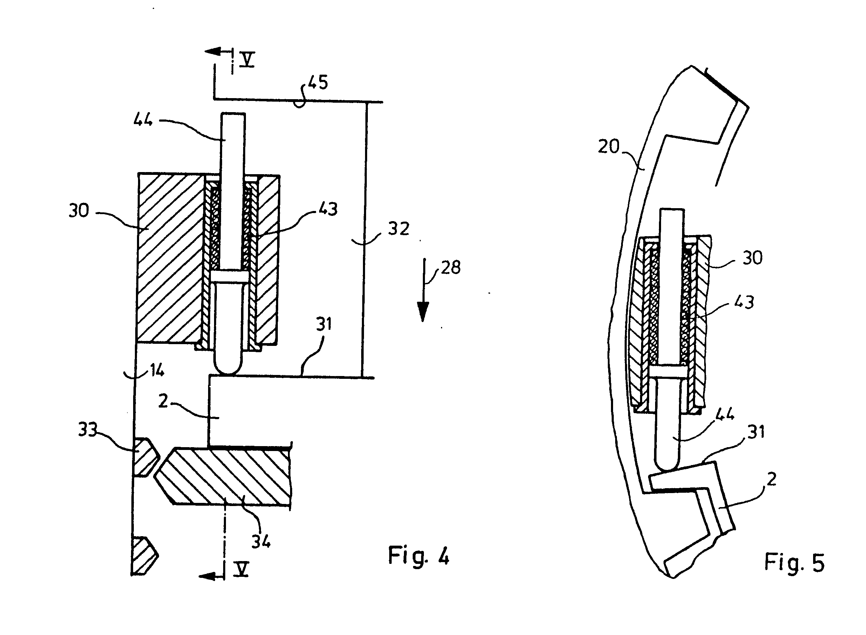

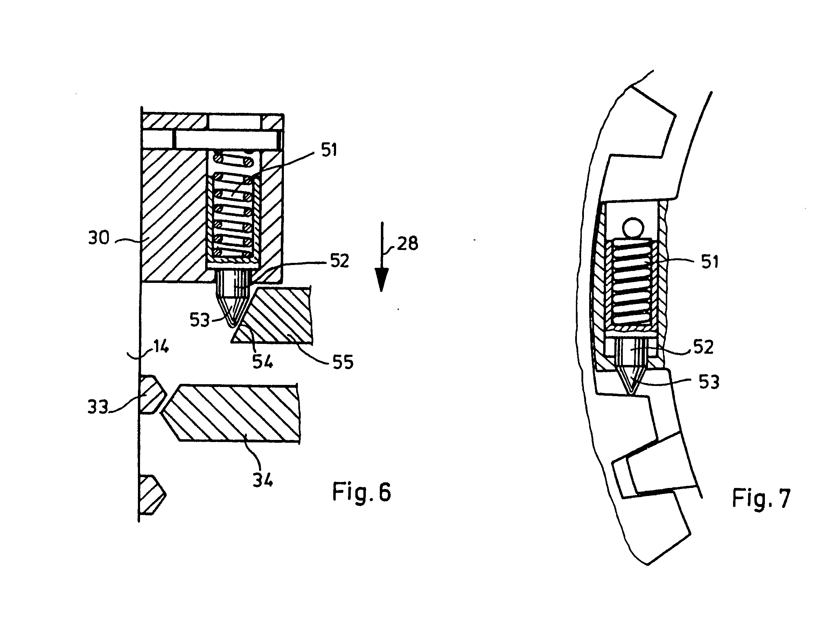

Die Fig. 6 und 7 veranschaulichen eine abgewandelte Ausführungsform der Bolzenanordnung nach den Fig. 4 und 5. In diesem Fall wirkt der wiederum in der Anschlagnase 30 des Synchronisierringes 14 angeordete, von einer Feder 51 belastete Bolzen 52 nicht mit der Flanke 31 der Aussparung 32, sondern mit dem abgeschrägten Ende eines verkürzten Zahnes 55 der Schaltmuffe zusammen.

Wird die Schaltmuffe, ausgehend von der in Fig. 2 dargestellten Lage des Synchronisierringes 14, axial in Richtung auf den Synchronisierring verschoben, so kommt der verkürzte Zahn 55 der Schaltmuffe mit seiner Schrägfläche 54 an der Kegelfläche 53 des Bolzens 52 zur Anlage und drückt den Bolzen gegen die Kraft der Feder 51 zurück. Wird dann in der beschriebenen Weise durch das Zusammenwirken der Sperrflächen an Schaltmuffe und Synchronisierring sowie der Kegelflächen am Synchronisierring und Kupplungskörper ein Gleichlauf erreicht, bei dem die Axialbewegung der Schaltmuffe fortgesetzt werden kann, so wird durch die Wirkung der Schrägfläche 54 am Ende des verkürzten Zahnes 55 der Schaltmuffe und der Kegelfläche 53 am Ende des Bolzens 52 ein von der axialen Bewegung der Schaltmuffe 20 abhängiges sowie durch Entspannen der Feder 51 schnelles Verdrehen des Synchronisierringes in die andere Sperrlage erreicht, die wiederum eine einwandfreie Beschleunigung des Radsatzes auf die Synchrondrehzahl entgegen den bremsenden Kräften im Getriebe und damit ein geräuschfreies Kuppeln ermöglicht.

Es versteht sich, daß die Erfindung nicht auf die dargestellten Ausführungsbeispiele beschränkt ist. Insbesondere ist es möglich, bei Getrieben entweder nur Schrägflächen oder nur Druckbolzen-Anordnungen zu verwenden, auch wenn eine Kombination dieser beiden Mittel zu besonders guten Ergebnissen führt. Weiterhin können anstatt der Sperrflächen an den Zähnen der Schaltmuffe oder zusätzlich dazu die in Laufrichtung hinteren Sperrflächen der am Synchronisierring angebrachten Zähne axial verlängert sein. Außerdem ist eine Kombination der erfindungsgemäßen Maßnahmen mit den in den Unterlagen der deutschen Patentanmeldung P 34 11 351.7 beschriebenen Maßnahmen möglich.

**Patentansprüche**

1. Synchronisiereinrichtung für Schaltkupplungen, insbesondere von Schaltgetrieben für Kraftfahrzeuge, mit mindestens einem Räderpaar (4/25, 5/26), dessen mit einer Schaltmuffe (20) gleichachsiges Zahnrad (4, 5) einen Kupplungskörper (10, 11) mit Außenverzahnung (16, 17) aufweist und durch axiales Verschieben der mit einer Welle (1) über eine Führungsmuffe (2) drehstarr verbundenen, eine Innenverzahnung (19) aufweisenden Schaltmuffe (20) in den Kraftfluß ein- bzw. aus ihm ausschaltbar ist, sowie mit einem Synchronisierring (14, 15), der in Umfangsrichtung mit der Schaltmuffe (20) in formschlüssiger und mit dem Kupplungskörper (10, 11) in reibungsschlüssiger Verbindung steht und Sperrflächen (35, 36) für die Schaltmuffe (20) aufweist, die bei jeder Relativdrehung zwischen Kupplungskörper (10, 11) und Schaltmuffe (20) in den durch die formschlüssige Verbindung zwischen Synchronisierring (14, 15) und Schaltmuffe (20) definierten Endlagen ein Ineingriffkommen der Innenverzahnung (19) der Schaltmuffe (20) mit der Außenverzahnung (16, 17) des Kupplungskörpers (10, 11) verhindern und erst bei Erreichen der Synchrondrehzahl unter Verdrehen von Synchronisierring (14, 15) und Kupplungskörper (10, 11) zulassen, dadurch gekennzeichnet, daß die beim Hochschalten in Laufrichtung (28) vordere Sperrfläche (37) an der Schaltmuffe (20) eine größere axiale Ausdehnung aufweist als die in Laufrichtung (28) hintere Sperrfläche (38), und die zugehörige eine Sperrfläche (36) am Synchronisierring (14, 15) in axialer Richtung noch überlappt, wenn die beim Hochschalten in Laufrichtung (28) hintere Sperrfläche (38) die ihr zugehörige andere Sperrfläche (35) am Synchronisierring (14, 15) bereits axial passiert hat.

2. Synchronisiereinrichtung nach Anspruch 1, dadurch gekennzeichnet, daß die Dachflächen (39, 40) an der Außenverzahnung (16) des Kupplungskörpers (10) in der gleichen Weise wie die Sperrflächen (37, 38) an der Schaltmuffe (20) unsymmetrisch ausgebildet sind, so daß in der Einrückstellung der Scheitel (41) zwischen den Sperrflächen an der Schaltmuffe wenigstens annähernd mittig zu den Scheiteln (42) zwischen den Dachflächen an zwei benachbarten Zähnen der Außenverzahnung des Kupplungskörpers (10) angeordnet ist.

3. Synchronisiereinrichtung für Schaltkupplungen, insbesondere von Schaltgetrieben für Kraftfahrzeuge, mit mindestens einem Räderpaar (4/25, 5/26), dessen mit einer Schaltmuffe (20) gleichachsiges Zahnrad (4, 5) einen Kupplungskörper (10, 11) mit Außenverzahnung (16, 17) aufweist und durch axiales Verschieben der mit einer Welle (1) über eine Führungsmuffe (2) drehstarr verbundenen, eine Innenverzahnung (19) aufweisenden Schaltmuffe (20) in den Kraftfluß ein- bzw. aus ihm ausschaltbar ist, sowie mit einem Synchronisierring (14, 15), der in Umfangsrichtung mit der Schaltmuffe (20) in formschlüssiger und mit dem Kupplungskörper (10, 11) in reibungsschlüssiger Verbindung steht und Sperrflächen (35, 36) für die Schaltmuffe (20) aufweist, die bei jeder Relativdrehung zwischen Kupplungskörper (10, 11) und Schaltmuffe (20) in den durch die formschlüssige Verbindung zwischen Synchronisierring (14, 15) und Schaltmuffe (20) definierten Endlagen ein Ineingriffkommen der Innenverzahnung (19) der Schaltmuffe (20) mit der Außenverzahnung (16, 17) des Kupplungskörpers (10, 11) verhindern und erst bei Erreichen der Synchrondrehzahl unter Verdrehen von Synchronisierring (14, 15) und Kupplungskörper (10, 11) zulassen, dadurch gekennzeichnet, daß zwischen Führungsmuffe (2) und Synchronisierring (14) ein Druckelement (43, 44) so angeordnet ist, daß es bestrebt ist, den Synchronisierring (14) in Bezug auf die Laufrichtung (28) in seiner gegenüber der Führungsmuffe (2) hinteren Stellung zu halten.

4. Synchronisiereinrichtung nach Anspruch 3, dadurch gekennzeichnet, daß das Druckelement durch einen sich in Umfangsrichtung der Synchronisiereinrichtung erstreckenden, von einer Feder (43, 51) belasteten, in seiner Längsrichtung verschiebbaren Bolzen (44, 52) gebildet wird.

5. Synchronisiereinrichtung nach Anspruch 4, dadurch gekennzeichnet, daß der Bolzen (44) in einer Anschlagnase (30) des Synchronisierrings (14) gelagert ist, die in einer Aussparung (32) der Führungsmuffe eingreift, und mit seinem freien Ende an der in Laufrichtung (38) vorderen Flanke (31) der Aussparung anliegt.

6. Synchronisiereinrichtung nach Anspruch 4, dadurch gekennzeichnet, daß der Bolzen (51) in einem axial gerichteten Vorsprung (30) des Synchronisierrings gelagert ist und an seinem freien Ende eine Schrägfläche (53) aufweist, die an einer entsprechenden, in Bezug auf die Laufrichtung (28) nach hinten weisenden Schrägfläche (54) der Schaltmuffe (20) anliegt.

7. Synchronisiereinrichtung nach Anspruch 6, dadurch gekennzeichnet, daß sich die Schrägfläche (54) der Schaltmuffe am Ende eines verkürzten Zahns (55) ihrer Innenverzahnung (19) befindet.

**Revendications**

1. Dispositif de synchronisation pour embrayages, en particulier de boîtes de vitesses pour véhicules à moteur, muni au moins d'un couple d'engrenages (4/25, 5/26), dont une roue dentée (4, 5) coaxiale avec un manchon d'embrayage (20) est dotée d'un corps d'embrayage (10, 11) présentant une denture extérieure (16, 17), et pouvant être engagé, respectivement, dégagé de la transmission de mouvement par translation axiale du manchon d'embrayage (20), lequel présente une denture interne (19) et est relié en rotation avec un arbre (1) par l'intermédiaire d'un manchon de guidage (2); dispositif de synchronisation muni également d'une bague de synchronisation (14, 15), reliée au manchon d'embrayage (20) par un engagement positif au niveau de sa circonférence, accouplée par friction avec le corps d'embrayage (10, 11), et dotée des surfaces de crabotage (35, 36) pour le manchon d'embrayage (20), qui, lors de chaque mouvement relatif de rotation entre le corps d'embrayage (10, 11) et le manchon d'embrayage (20), dans les positions extrêmes définies par la liaison à engagement positif entre la bague de synchronisation (14, 15) et le manchon d'embrayage (20), empêchent un engagement de la denture interne (19) du manchon d'embrayage (20) dans la denture externe (16, 17) du corps d'embrayage (10, 11) et n'autorise cet engagement qu'après avoir atteint le régime synchrone par rotation de la bague de synchronisation (14, 15) et du corps d'embrayage (10, 11); ce dispositif de synchronisation est caractérisé en ce que la surface de crabotage antérieure (37) du manchon d'embrayage (20), dans le sens de rotation (28) lors de l'engagement d'une vitesse supérieure, présente un dégagement axial plus grand que la surface de crabotage (38) postérieure dans le sens de rotation (28), et en ce que la surface de crabotage antérieure (37) recouvre encore une surface de crabotage (36) correspondante de la bague de synchronisation (14, 15) dans la direction axiale, quand la surface de crabotage postérieure (38), dans le sens de rotation (28) lors de l'engagement d'une vitesse supérieure, a déjà dépassé axialement l'autre surface de crabotage (35) correspondante au niveau de la bague de synchronisation (14, 15).

2. Dispositif de synchronisation, selon la revendication 1, caractérisé en ce que les entrées de dents (39, 40) de la denture externe (16) du corps d'embrayage (10) ont une forme asymétrique tout comme les surfaces de crabotage (37, 38) du manchon d'embrayage (20), de sorte que, dans la position crabotée, le sommet (41) entre les surfaces de crabotage du manchon d'embrayage se trouve au moins approximativement au milieu des sommets (42) des entrées de dents de deux dents voisines de la denture externe du corps d'embrayage (10).

3. Dispositif de synchronisation pour embrayages, en particulier de boîtes de vitesses pour véhicules à moteur, muni au moins d'un couple d'engrenages (4/25, 5/26), dont une roue dentée (4, 5) coaxiale avec un manchon d'embrayage (20) est dotée d'un corps d'embrayage (10, 11) présentant une denture extérieure (16, 17), et pouvant être engagé, respectivement, dégagé de la transmission de mouvement par translation axiale du manchon d'embrayage (20), lequel présente une denture interne (19) et est solidaire d'un arbre (1) par l'intermédiaire d'un manchon de guidage (2); dispositif de synchronisation muni également d'une bague de synchronisation (14, 15), reliée au manchon d'embrayage (20) par un engagement positif au niveau de sa circonférence, accouplée par friction avec le corps d'embrayage (10, 11), et dotée des surfaces de crabotage (35, 36) pour le manchon d'embrayage (20), qui, lors de chaque mouvement relatif de rotation entre le corps d'embrayage (10, 11) et le manchon d'embrayage (20), dans les positions extrêmes définies par la liaison à engagement positif entre la bague de synchronisation (14, 15) et le manchon d'embrayage (20), empêchent un engagement de la denture interne (19) du manchon d'embrayage (20) dans la denture externe (16, 17) du corps d'embrayage (10, 11) et n'autorise cet engagement qu'après avoir atteint le régime synchrone par rotation de la bague de synchronisation (14, 15) et du corps d'embrayage (10, 11); dispositif de synchronisation caractérisé en ce qu'un élément de pression (43, 44) est disposé entre le manchon de guidage (2) et la bague de synchronisation (14) de telle sorte qu'il est contraint de maintenir la bague de synchronisation (14) dans sa position postérieure relativement au manchon de guidage (2), par rapport à la direction de rotation (28).

4. Dispositif de synchronisation, selon la revendication 3, caractérisé en ce que l'élément de pression consiste en un poussoir (44, 52) plaqué par un ressort (43, 51), disposé tangentiellement à la circonférence du dispositif de synchronisation et pouvant être translaté longitudinalement.

5. Dispositif de synchronisation, selon la revendication 4, caractérisé en ce que le poussoir (44) est logé dans un nez de butée (30) de la bague de synchronisation (14), qui s'engage dans un dégagement (32) du manchon de guidage et dont l'extrémité libre est en contact avec les flancs antérieurs (31) du dégagement dans le sens de rotation (28).

6. Dispositif de synchronisation, selon la revendication 4, caractérisé en ce que le poussoir (51) est logé dans une saillie (30) de la bague de synchronisation, parallèle à l'axe de la bague de synchronisation et présente à son extrémité libre une surface oblique (53), qui repose sur une surface oblique (54) correspondante du manchon d'embrayage (20), orientée vers l'arrière par rapport au sens de rotation (28).

7. Dispositif de synchronisation, selon la revendication 6, caractérisé en ce que la surface oblique (54) du manchon d'embrayage se trouve à l'extrémité d'une dent raccourcie (55) de sa denture interne (19).

**Claims**

1. Synchronizing device for clutches, in particular for motor vehicle transmissions, comprising at least one pair of gears (4/25, 5/26) having one gear (4, 5) being arranged coaxially with a gearshift sleeve (20) and being provided with a clutch body (10, 11) having an external toothing (16, 17) the one gear (4, 5) being arranged to be shifted into or out of the flux of driving force by axial displacement of the gearshift sleeve (20) having an internal toothing (19) and being fixed to a shaft (1) via a guide sleeve (2) so as to rotate with the shaft (1), the synchronizing device comprising further a synchronizing ring (14, 15) which in a circumferential direction is in form-locking engagement with the gearshift sleeve (20) and is in frictional engagement with the clutch body (10, 11) and which comprises check faces (35, 36) for the gearshift sleeve (20) preventing the internal toothing (19) of the gearshift sleeve (20) from coming into engagement with the external toothing (16, 17) of the clutch body (10, 11) during any relative rotation between the clutch body (10, 11) and the gearshift sleeve (20) in the end positions defined by the form-locking engagement between the synchronizing ring (14, 15) and the gearshift sleeve (20), and permitting such engagement only when synchronous speed is attained with the synchronizing ring (14, 15) rotating relative to the clutch body (10, 11), characterized in that the check face (37) on the gearshift sleeve (20) being in a forward position in the direction of rotation (28) during upshift has a larger axial dimension as the check face (38) being in a rearward position in the direction of rotation (28), and still overlaps its corresponding one check face (36) on the synchronizing ring (14, 15) in an axial direction when the check face (38) being in a rearward position in the direction of rotation (28) has already axially passed by its corresponding other check face (35) on the synchronizing ring.

2. The synchronizing device of claim 1, characterized in that the roof faces (39, 40) of the external toothing (60) of the clutch body (10) are designed asymmetrically in the same manner as the check faces (37, 38) of the gearshift sleeve (20) so that in the engaged position the crest (41) formed between the check faces of the gearshift sleeve is positioned at least approximately symmetrical relative to the crests formed between the roof faces of two neighbouring teeth of the external toothing of the clutch body (10).

3. Synchronizing device for clutches, in particular for motor vehicle transmissions, comprising at least one pair of gears (4/25, 5/26) having one gear (4, 5) being arranged coaxially with a gearshift sleeve (20) and being provided with a clutch body (10, 11) having an external toothing (16, 17) the one gear (4, 5) being arranged to be shifted into or out of the flux of driving force by axial displacement of the gearshift sleeve (20) having an internal toothing (19) and being fixed to a shaft (1) via a guide sleeve (2) so as to rotate with the shaft (1), the synchronizing device comprising further a synchronizing ring (14, 15) which in a circumferential direction is in form-locking engagement with the gearshift sleeve (20) and is in frictional engagement with the clutch body (10, 11) and which comprises check faces (35, 36) for the gearshift sleeve (20) preventing the internal toothing (19) of the gearshift sleeve (20) from coming into engagement with the external toothing (16, 17) of the clutch body (10, 11) during any relative rotation between the clutch body (10, 11) and the gearshift sleeve (20) in the end positions defined by the form-locking engagement between the synchronizing ring (14, 15) and the gearshift sleeve (20), and permitting such engagement only when synchronous speed is attained with the synchronizing ring (14, 15) rotating relative to the clutch body (10, 11), characterized in that a pressure element (43, 44) is provided between the guide sleeve (2) and the synchronizing ring (14), which pressure element (43, 44) tends to retain the synchronizing ring (14) in its rearward position, relative to the guide sleeve (2), viewed in the direction of rotation (28).

4. The synchronizing device of claim 3, characterized in that the pressure element is formed by a bolt (44, 52) extending in the circumferential direction of the synchronizing device, and being loaded by a spring (43, 51) and being adapted to be displaced in its longitudinal direction.

5. The synchronizing device of claim 4, characterized in that the bolt (44) is seated in a stop nose (30) of the synchronizing ring (14) engaging a recess (32) in the guide sleeve and has its free end in contact with the leading flank (31) of the recess, viewed in the direction of rotation.

6. The synchronizing device of claim 4, characterized in that the bolt (51) is seated in an axial projection (30) of the synchronizing ring and is provided on its free end with an inclined face (53) which is in contact with a matching inclined face (54) on the gearshift sleeve (20) pointing rearwardly in the direction of rotation (28).

7. The synchronizing device of claim 6, characterized in that the inclined face (54) of the gearshift sleeve is provided on the end of a shorter tooth (55) of its internal toothing (19).

Fig.1

Fig. 2

Fig. 3

Fig. 4

Fig. 5

Fig. 6

Fig. 7